Europäisches Patentamt

European Patent Office

Office européen des brevets

(19)

(11) Veröffentlichungsnummer: **0 348 657**

**A2**

# EUROPÄISCHE PATENTANMELDUNG

(21) Anmeldenummer: 89108893.2

(22) Anmeldetag: 18.05.89

(51) Int. Cl.4: **G01L 9/06 , G01L 1/18**

Die Bezeichnung der Erfindung wurde geändert (Richtlinien für die Prüfung im EPA, A-III, 7.3).

(30) Priorität: 28.05.88 DE 3818191

(43) Veröffentlichungstag der Anmeldung:
03.01.90 Patentblatt 90/01

(84) Benannte Vertragsstaaten:
CH DE ES FR GB IT LI SE

(71) Anmelder: **ROBERT BOSCH GMBH**
**Postfach 10 60 50**
**D-7000 Stuttgart 10(DE)**

(72) Erfinder: **Schmid, Kurt**
**Schlossstrasse 55**
**D-7257 Ditzingen 4(DE)**
Erfinder: **Heinz, Rudolf, Dr., Dipl.-Ing.**
**Eltinger Weg 26**
**D-7253 Renningen(DE)**
Erfinder: **Schoor, Ulrich**
**Tuchbleiche 5**
**D-7000 Stuttgart 40(DE)**
Erfinder: **Wendel, Jürgen**
**Germersheimer Strasse 14**
**D-7000 Stuttgart 31(DE)**

(54) **Druck- oder Kraftsensor.**

(57) Bei einem Sensor (12) zur Bestimmung des Drucks oder der Kraft wird auf einem Träger (10) ein Dickschichtwiderstand (11) aufgedruckt. Mit Hilfe von Leiterbahnen (26) wird das Meßsignal vom Dickschichtwiderstand (11) zu den Ableitungen (17) geführt. Die Kontaktstelle zwischen den Leiterbahnen (26) und den Ableitleitungen (17) liegt außerhalb des direkten Kraftflusses, so daß eine homogene Lastverteilung über den gesamten Bereich des Dickschichtwiderstands (11) möglich ist.

FIG.1

EP 0 348 657 A2

## Sensor

### Stand der Technik

Die Erfindung geht aus von einem Sensor zur Bestimmung des Drucks oder der Kraft nach der Gattung des Anspruchs 1. Bei derartigen bekannten Sensoren ist der Dickschichtwiderstand auf einem Träger aufgedruckt. Die Ableitdrähte für die Signale werden durch den Träger hindurch geführt und werden direkt an der Unterseite des Dickschichtwiderstands mit diesem kontaktiert. Bei thermischen Schwankungen können sich aber der Träger und die Ableitdrähte unterschiedlich ausdehnen. Dadurch können sich im Bereich der Kontaktierung der Ableitungen Störbereiche bilden, die das Meßsignal stören und verfälschen können. Ferner liegen diese Kontaktierungsstellen im Bereich der Krafteinleitung auf dem Dickschichtwiderstand, wodurch keine gleichmäßige Lastverteilung über den gesamten Dickschichtwiderstand möglich ist. Bereits kleinste Unebenheiten können zu einer inhomogenen Lastverteilung führen. Durch die Ableitdrähte wird aufgrund des unterschiedlichen elastischen Verhaltens gegenüber dem Träger ein in diesem Bereich anderer Gegendruck bewirkt, der die gleichmäßige Verteilung der Last verhindert.

### Vorteile der Erfindung

Der erfindungsgemäße Sensor mit den kennzeichnenden Merkmalen des Anspruchs 1 hat demgegenüber den Vorteil, daß eine gleichmäßige, homogene Lastverteilung über den gesamten Dickschichtwiderstand während der Messung möglich ist. Dadurch kann eine hysteresearme und bereits im Anfangsbereich lineare Kennlinie erreicht werden. Die Kontaktierungsstellen der Ableitdrähte liegen außerhalb des eigentlichen Meßbereichs und können somit die Wirkung des Dickschichtwiderstands nicht störend beeinflussen. Mit Hilfe sehr dünner Leiterbahnen kann die Kontaktstelle der Ableitdrähte in einfacher Weise außerhalb des direkten Kraftflusses gelegt werden.

Durch die in den Unteransprüchen aufgeführten Maßnahmen sind vorteilhafte Weiterbildungen des im Anspruch 1 angegebenen Sensors möglich.

### Zeichnung

Ausführungsbeispiele der Erfindung sind in der Zeichnung dargestellt und in der nachfolgenden Beschreibung näher erläutert. Es zeigen die

Figur 1 einen Sensor in perspektivischer Darstellung,

Figur 2 einen Längsschnitt durch ein erstes Ausführungsbeispiel,

Figur 2a einen Blick in Richtung II-II nach Figur 2,

Figur 2b und 2c je eine Einzelheit,

Figur 3 einen Längsschnitt durch ein zweites Ausführungsbeispiel,

Figur 3a einen Blick in Richtung III-III nach Figur 3,

Figur 4 ein weiteres Ausführungsbeispiel,

Figur 4a einen Schnitt in Richtung IV-IV nach Figur 4,

Figur 5 eine Einzelheit und die

Figuren 6 und 7 je einen Sensor für eine direkte Messung im Medium.

### Beschreibung der Ausführungsbeispiele

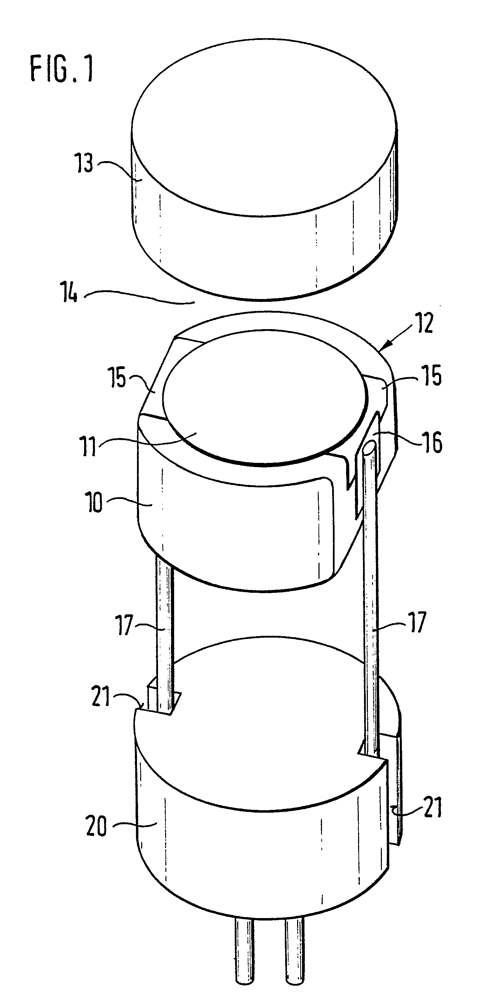

In der Figur 1 ist mit 10 der Träger eines Dickschichtwiderstands 11, eines Sensors 12 bezeichnet, der als Drucksensor oder als Kraftsensor verwendet werden kann. Der Dickschichtwiderstand 11 wird von einem Krafteinleitungsteil 13 abgedeckt. Sowohl der Träger 10 als auch das Krafteinleitungsteil 13 ist fest mit dem Dickschichtwiderstand 11 verbunden, wodurch eine gleichmäßige Kraftverteilung auf den Dickschichtwiderstand 11 möglich ist. Ferner entsteht am äußeren Rand des Trägers zwischen diesem und dem Krafteinleitungsteil 13 ein geringer Spalt 14, der der Dicke des Dickschichtwiderstands 11 entspricht.

Der Träger 10 und das Krafteinleitungsteil 13 bestehen aus einem elektrisch nicht leitenden Material, z.B. Keramik oder emailliertes Metall. Zur Ableitung des Meßsignals vom Dickschichtwiderstand 11 wird an zwei gegenüberliegenden Kanten des Trägers 10 eine elektrisch leitende Schicht 15, z.B. aus Goldresinat aufgedruckt, die auch auf die Seitenfläche des Trägers 10 reicht. Ferner ist an der Seitenfläche des Trägers 10 je eine metallische Zone 16 aus z.B. Silberpaladium oder aktivem Lot aufgebracht, die mit der Schicht 15 überlappt. Auf diesen Zonen 16 ist das Ende der elektrischen Ableitdrähte 17 angeschlossen. Hierzu wird das Dickdrahtbonden, Löten, Punktschweißen oder mechanisches Andrücken verwendet. Der Träger 10 liegt auf einem Druckstück 20 auf, in dessen seitlichen Längsnuten 21 die Ableitdrähte 17 angeordnet sind. Der gesamte Sensor 12 kann in einem nicht dargestellten Gehäuse eingebaut sein oder frei im zu bestimmenden Medium hängen.

Bei der Herstellung des Sensors 12 wird auf dem Träger 10 ein Dickschichtwiderstand mittels bekannten Tampondruck- oder Siebdruckverfahren aufgedruckt. Im noch weichen Zustand des Dickschichtwiderstands 11 wird das Krafteinleitungsteil 13 aufgesetzt und leicht an gedrückt. Eine Vorspannung wie bei herkömmlichen Sensoren ist nicht notwendig. Anschließend wird das Bauteil, bestehend aus dem Träger 10, dem Dickschichtwiderstand 11 und dem Krafteinleitungsteil 13 ausgehärtet. Dadurch entsteht ein fester, inniger Verbund sowohl des Trägers 10 als auch des Krafteinleitungsteils 13 mit dem Dickschichtwiderstand 11. Zur Verbesserung der Haftfestigkeit zwischen den Teilen kann auf die dem Träger 10 zugewandte Stirnseite des Krafteinleitungsteils 13 ein zweiter Dickschichtwiderstand aufgedruckt werden. Auch hier werden im noch weichen Zustand die Teile aufeinandergesetzt und anschließend ausgehärtet. Da hier zwei Dickschichtwiderstände, einer bereits ausgehärtet und einer im weichen Zustand, aufeinandergesetzt werden, ergibt sich ein besonders guter und fester Verbund und eine ebene Fläche zwischen dem Träger 10 und dem Krafteinleitungsteil 13, so daß eine gleichmäßige Krafteinleitung auf den Dickschichtwiderstand 11 möglich ist. Der Dickschichtwiderstand 11 wirkt somit sowohl als Meßelement als auch als Verbindungselement zwischen dem Träger 10 und dem Krafteinleitungsteil 13.

Es ist aber auch möglich, den Dickschichtwiderstand 11 mit Hilfe einer Glaseinschmelzung oder eines Klebstoffs mit dem Krafteinleitungsteil 13 zu verbinden. Werden nicht bereits isolierte Ableitungen 17 verwendet, so können bei Aluminiumdrähten mittels Eloxieren oder Eintauchen in temperaturfesten Lack die Drähte isoliert werden.

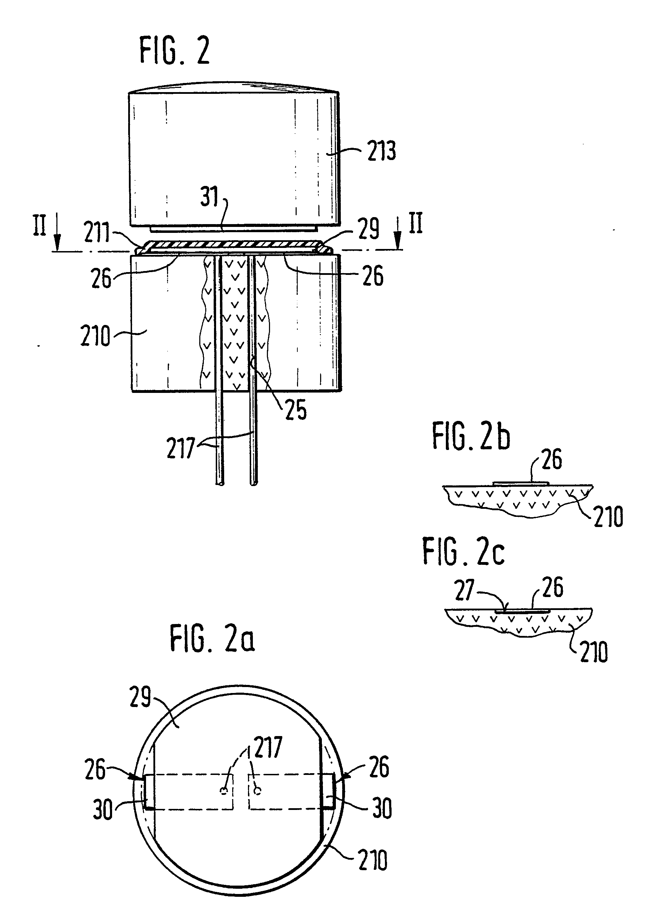

Im Ausführungsbeispiel nach Figur 2 werden die Ableitdrähte 217 in Längsbohrungen 25 des Trägers 210 mittels aktivem Lot eingelötet. Falls der Ableitdraht 217 aus hochtemperaturbeständigem Material besteht, kann er bereits beim Sintern des Trägers 210 in diesen eingelegt werden. Auf dem Trager 210 sind zwei, wie aus Figur 2a ersichtlich, zum Rand des Trägers 210 hin verlaufende Leiterbahnen 26 angeordnet, die mit dem Ableitdrähten 217 verbunden sind. Die Leiterbahnen 26 sind sehr dünn ausgebildet und können z.B. durch das Siebdruckverfahren aufgebracht werden. Sie können direkt auf die Ober fläche des Trägers 210 aufgedruckt werden. Dabei ist es möglich, die Leiterbahnen 26 direkt auf die Oberfläche des Trägers 210 aufzudrukken, wie in Figur 2b dargestellt, oder in einer Nut 27, wie in Figur 2c dargestellt, anzuordnen, wobei die Nut 27 auch direkt mit aktivem Lot ausgefüllt werden kann. Auf die Leiterbahnen 26 und die Oberfläche des Trägers 210 ist eine Isolationsschicht 29 aufgedruckt, die z.B. aus Glas oder aus einem Polymerwerkstoff bestehen kann. Die Isolationsschicht 29 ist dabei so angeordnet, daß die Endbereiche 30 der Leiterbahnen 26, d.h. die der Außenseite des Trägers 210 zugewandten Enden 30 der Leiterbahnen 26 frei bleiben. Auf die Isolationsschicht 29 ist als eigentliches Meßelement der Dickschichtwiderstand 211 so aufgedruckt, daß er auch mit den freien Enden 30 der Leiterbahnen 26 Kontakt hat.

Befindet sich auf dem Krafteinleitungsteil 213 kein zweiter Dickschichtwiderstand, so kann die feste Verbindung zum Krafteinleitungsteil 213 mittels einer Glaseinschmelzung oder eines Klebstoffs hergestellt werden, wobei beide Verbindungen vorzugsweise nur die Größe der Isolationsschicht 29 haben sollen.

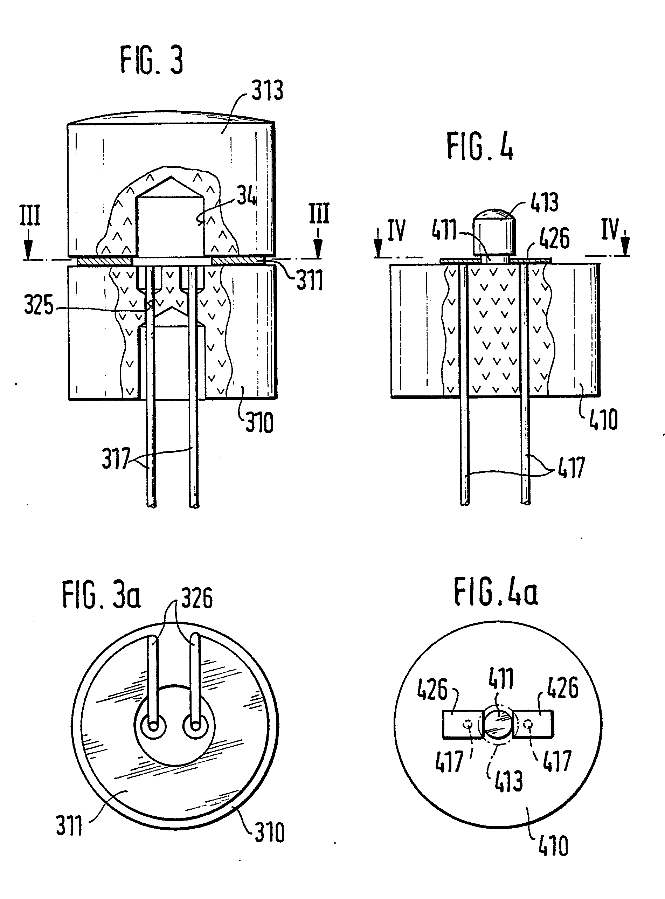

Im Ausführungsbeispiel nach Figur 3 sind, wie bei dem nach Figur 2, die Anschlußdrähte 317 in etwa mittig ausgebildeten Längsbohrungen 325 angeordnet. Mit Hilfe des Siebdruckverfahrens sind auf den Träger 310 zwei Leiterbahnen 326 aufgebracht, die von den Enden der Ableitdrähte 317 parallel nach außen zum Rand des Trägers 310 hin verlaufen. Die Leiterbabnen 326 können zur Kontaktierung auch in die Längsbohrungen 325 hinein entlang der Ableitdrähte 317 geführt werden und weisen dadurch einen größeren Überlappungsbereich auf. Auch können, wie in Figur 2c gezeigt, die Leiterbahnen 326 in Nuten angeordnet sein, wobei sie auch durch Kleben oder durch aktives Löten befestigbar sind. Wie in den anderen Ausführungsbeispielen ist auf dem Träger 310 wieder der Dickschichtwiderstand 311 aufgedruckt. Dieser ist als Ring ausgebildet und überdeckt dabei den Bereich der Kontaktierung der Ableitdrähte 317 und der Leiterbahnen 326 nicht. Das Krafteinleitungsteil 313 weist etwa mittig, d.h. korrespondierend mit dem Bereich der Kontaktierung der Leiterdrähte 317 mit den Leiterbahnen 326 eine Ausnehmung 34 auf, die einen runden Querschnitt hat. Dadurch ist der Bereich der Leiterdraht-Kontaktierung frei von jedem Kraftfluß. Der Kraftfluß wird somit über den Rand des Krafteinleitungsteils 313 auf den Dickschichtwiderstand 311 geleitet.

Wird der Sensor zusätzlich noch in ein nicht dargestelltes Gehäuse eingebaut, so kann statt des oben geschlossenen Krafteinleitungsteils 313 mit der Ausnehmung 34 auch ein ringförmiges Krafteinleitungsteil verwendet werden. Die durchgehende Bohrung muß dann mindestens den Durchmesser des Kontaktierungsbereichs der Leiterbahnen 326 mit den Ableitdrähten 317 haben.

In Figur 4 ist eine Abwandlung des Ausführungsbeispiels nach Figur 3 dargestellt. Der Träger 410 hat dabei einen größeren Durchmesser als das Krafteinleitungsteil 413. Dadurch können die beiden Ableitdrähte 417 soweit voneinander entfernt im Träger 410 angeordnet sein, daß zwischen ihnen Platz für das Krafteinleitungsteil 413 besteht. Die Ableitdrähte 417 verlaufen somit außerhalb des Bereichs des Krafteinleitungsteils 413. Der Dickschichtwiderstand 411 ist, wie in den vorherigen Beispielen beschrieben, aufgebracht. Die Leiterbahnen 426 überlappen sich wieder mit dem Dickschichtwiderstand 411 und führen zu den Enden der Ableitdrähte 417. Wie aus der Figur 4a ersichtlich, liegt die Verbindungsstelle zwischen den Ableitdrähten 417 mit den Leiterbabnen 426 außerhalb des Bereichs des Krafteinleitungsteils 413 und somit des direkten Kraftflusses.

Wird, wie bei der Beschreibung der Figur 3 erwähnt, der Sensor 12 in ein Gehäuse eingebaut, so ist es notwendig die Ableitdrähte möglichst eng beieinander durch das Gehäuse zu führen. Somit ist nur eine Bohrung mit geringen Durchmessern notwendig, wodurch die Festigkeit des Gehäuses nur geringfugig verringert wird. Auf der dem Dickschichtwiderstand abgewandten Stirnseite des Trägers 510 ist eine flache Längsnut 36 ausgebildet. Ferner befindet sich unterhalb des Trägers 510 ein dünnes Substrat 35, das eine zur Längsnut 36 korrespondierende Längsnut 37 aufweist. Die Ableitdrähte 517 werden durch Bohrungen 38 durch den Trager 510 hindurchgeführt und in den Längsnuten 36, 37 zu Bohrungen 39 im Substrat 35 geleitet. Die Bohrungen 39 sind etwa mittig im Substrat 35 ausgebildet und haben nur einen geringen Abstand voneinander. Der Träger 510 und das Substrat 35 sind mit Hilfe von Klebetechnik oder Glaseinschmelzung miteinander verbunden.

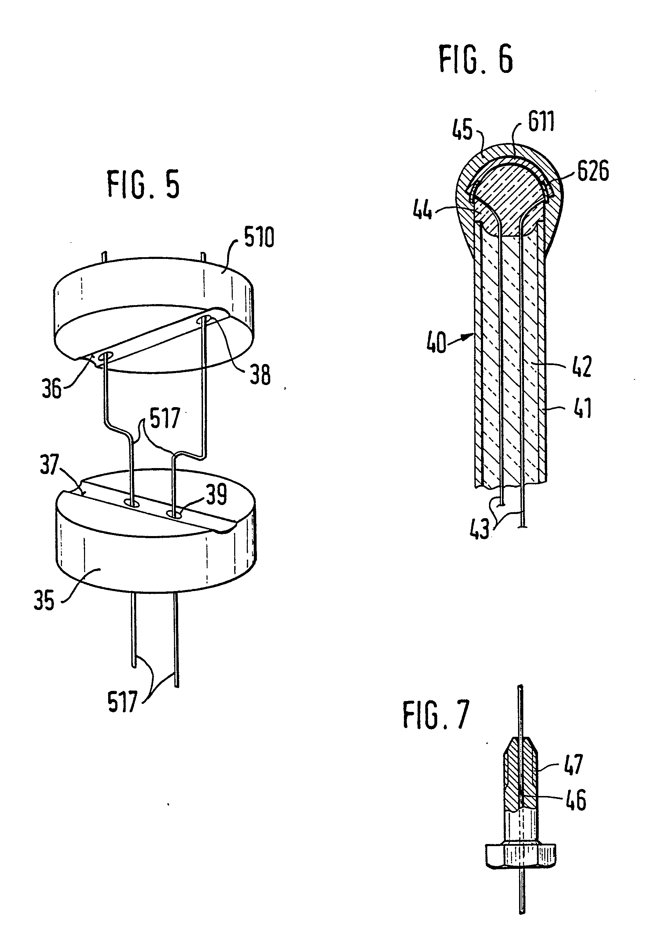

Während die Ausführungsbeispiele nach den Figuren 1 bis 5 für den Einbau in ein Gehäuse oder z.B. in eine Bohrung in einer Schraube vorgesehen sind, ragen die Sensoren nach den Ausführungsbeispielen nach den Figuren 6 und 7 direkt in das Medium hinein, dessen Druck bestimmt werden soll. Hierzu wird in Figur 6 ein herkömmlich bekanntes Koaxialkabel 40 verwendet. Es besteht aus einem metallischen Außenmantel 41 in dem in einer Isoliermasse 42 zwei elektrische Leiter 43 angeordnet sind. Auf das Koaxialkabel 40 ist ein Tropfen 44 einer Glasschmelze aufgesetzt, durch den die Leiter 43 geführt sind. Der Tropfen 44 sitzt auf dem Außenmantel 41 auf und schließt das Koaxialkabel 40 dicht ab. Ferner hält er gleichzeitig die Leiter 43. Auf den Tropfen 44 ist der Dickschichtwiderstand 611 aufgedruckt, der von den Leiterbahnen 626 zu den Enden der Leiter 43 führen. Zum Schutz vor Umwelteinflüssen und vor einem Angriff des zu bestimmenden Mediums ist der Tropfen 44 und das Ende des Außenmantels 41 mit einem Schutzlack 45 überzogen. Der Sensor kann wie in Figur 7 dargestellt, in eine Längsbohrung 46 einer Schraube 47 eingesetzt werden. Die Schraube 47 dient zugleich als Halterung für den Sensor und auch als Verschluß für die Öffnung.

## Ansprüche

1. Sensor (12) zur Bestimmung des Drucks oder der Kraft mit Hilfe eines auf einem Träger (10) aufgebrachten Dickschichtwiderstands (11), dadurch gekennzeichnet, daß der Dickschichtwiderstand (11) mit Hilfe von Leiterbabnen (15) mit den Ableitleitungen (17) verbunden ist und daß die Kontaktstelle bzw. Kontaktstellen zwischen den Ableitungen (17) und den Leiterbahnen (15) außerhalb des direkten Kraftflusses liegt bzw. liegen.

2. Sensor nach Anspruch 1, dadurch gekennzeichnet, daß der Dickschichtwiderstand (11) auf einem Träger (10) aus elektrisch nicht leitendem Material aufgebracht ist und mit einem Krafteinleitungsteil (13) aus elektrisch nicht leitendem Material in Wirkverbindung steht.

3. Sensor nach Anspruch 2, dadurch gekennzeichnet, daß die Ableitleitungen (17) an der Seitenwand des Trägers (10) angeordnet sind und die Leiterbabnen (15) vom Dickschichtwiderstand (11) über die Kante des Trägers (10) zu den Ableitleitungen (17) geführt werden.

4. Sensor nach Anspruch 2, dadurch gekennzeichnet, daß die Kontaktstelle zwischen den Leiterbahnen (26) und den Ableitleitungen (17) von einer Glaseinschmelzung (29) überdeckt sind, daß die Glaseinschmelzung (29) die Größe des wirksamen Bereichs des auf der aufgebrachten Dickschichtwiderstands aufweist und daß die Kontaktstelle zwischen den Leiterbahnen (26) und dem Dickschichtwiderstand (11) außerhalb der Glaseinschmelzung (29) liegt.

5. Sensor nach Anspruch 2, dadurch gekennzeichnet, daß das Krafteinleitungsteil (13) im Bereich der Kontaktstelle zwischen den Ableitleitungen (17) und den Kontaktbahnen (26) eine Ausnehmung (34) aufweist, daß der Dickschichtwiderstand (11) im Bereich der verbleibenden Kontaktfläche zwischen dem Träger (10) und dem Krafteinleitungsteil (13) aufgebracht ist.

6. Sensor nach Anspruch 2, dadurch gekennzeichnet, daß das Krafteinleitungsteil (13) zwischen den beiden Ableitleitungen (17) angeordnet ist, so daß die Kontaktstelle zwischen den Ableitleitungen (17) und den Leiterbahnen (26) außerhalb des Bereichs des Krafteinleitungsteils (13) liegt.

7. Sensor nach einem der Ansprüche 1 bis 6, dadurch gekennzeichnet, daß auf der dem Träger (10) zugewandten Stirnseite des Krafteinleitungsteils (13) ein zweiter Dickschichtwiderstand (31) aufgebracht ist.

8. Sensor nach Anspruch 1, dadurch gekennzeichnet, daß auf einem Koaxialkabel (41) ein Tropfen (44) einer Glasschmelze aufgesetzt ist, auf der der Dickschichtwiderstand (12) aufgedruckt ist.

21857

FIG.1

13

14

12

15    15

11    16

10

17    17

21

20    21

# FIG. 2

213

31

II

211

29

II

26

26

210

25

217

## FIG. 2b

26

210

## FIG. 2c

27

26

210

## FIG. 2a

29

217

26

26

30

30

210

FIG. 3

313

III    III

34

311

325

310

317

FIG. 4

413

411    426

IV    IV

410

417

FIG. 3a    326

311    310

FIG. 4a

426    411    426

417    417

413

410

# FIG. 5

# FIG. 6

# FIG. 7